(19) Europäisches Patentamt
European Patent Office
Office européen des brevets

(11) Publication number: **0 320 140 A1**

# (12) EUROPEAN PATENT APPLICATION

(21) Application number: **88311016.5**

(51) Int. Cl.4: **A62D 3/00 , B01D 53/34**

(22) Date of filing: **22.11.88**

A request for correction in the originally filed description, claims and drawings has been filed pursuant to Rule 88 EPC. A decision on the request will be taken during the proceedings before the Examining Division (Guidelines for Examination in the EPO, A-V, 2.2).

(30) Priority: **07.12.87 US 129807**

(43) Date of publication of application: **14.06.89 Bulletin 89/24**

(84) Designated Contracting States: **AT BE CH DE ES FR GB IT LI LU NL SE**

(71) Applicant: **WORMALD U.S. INC.**
**15806 Midway Road**
**Dallas Texas 75244(US)**

(72) Inventor: **Mandel, Frederick Steven**
**Route 3, Box 213GB**
**Marinette, Wisconsin(US)**

(74) Representative: **Jump, Timothy John Simon et al**
**VENNER, SHIPLEY & CO. 368 City Road**
**London EC1V 2QA(GB)**

## (54) Solidification and vapor mitigation of aldehyde spills.

(57) This invention relates to a composition and method for solidifying hazardous aldehyde spills. According to this invention, acidic solid or liquid formulations of urea and other components is applied to hazardous aldehyde spills. The urea formulations act to polymerize the aldehyde and cause it to solidify. The polymerization reaction also mitigates the hazardous vapors arising from such spills. The resultant product is a solid polymer waste which can be relatively easily disposed of.

EP 0 320 140 A1

## SOLIDIFICATION AND VAPOR MITIGATION OF ALDEHYDE SPILLS

This invention relates to compositions and methods of treating and reducing the hazards of formaldehyde and other aldehyde spills by solidification and vapor mitigation.

Formaldehyde is a ubiquitous chemical present in germicides, disinfectants and fungicides. Formaldehyde is also widely employed in the manufacture of phenolic resins, cellulose and organic chemicals. Formaldehyde and other alkyl-and aryl-aldehydes are highly volatile organic compounds which can cause serious injury and illness to those who inhale or ingest them.

Aldehydes are liquids and volatile gases which can be easily spilled in a laboratory, hospital or factory situation. Accidental spills require immediate clean-up to prevent extremely hazardous situations. Spills are uncontrolled and unpredictable. Until now, no method has been adequate to handle such spills. For example, methods using absorption on sand or vermiculite require dangerous manual application. Furthermore, such prior art methods do not alter the nature of the spilled chemical and, therefore, prolong exposure to the dangerous fumes it engenders.

Several patents and publications describe methods of treating formaldehyde in waste waters or ambient air. However, none describes a method of treating a hazardous aldehyde spill. For example, Japanese Patent No. 78-34184 (September 19, 1978) describes the treatment of waste waters containing phenol and formaldehyde. Waste waters containing phenol and formaldehyde are mixed with urea, heated at 90° or above and maintained at a pH of less than 1. The concentrations of phenol and formaldehyde are adjusted, and the waste water is mixed with a specific concentration of urea in a specified mole ratio. The waste water is then allowed to settle. However, this process cannot be used to treat a hazardous, accidental spill because the spill is not controllable. It cannot be heated and pH-regulated as a waste water can be. Furthermore, the reaction time is at least four hours, which is much too long a period for treating a hazardous spill.

Canadian Patent No. 1,162,904 (Kabat, February 28, 1984) describes the use of urea, among other protein compounds, in an adsorbent which acts to remove formaldehyde as an air contaminant. The urea, according to this patent, may also be placed in a filter or an absorber film. The Kabat patent does not solve the problem of how to treat an uncontrolled accidental spill of formaldehyde.

United States Patent No. 3,909,408 (Ishida, September 30, 1975) relates to the use of sulfites and bisulfites as agents for the removal of aldehydes from solution or gas. These reactions can take place in a reactor tank. Again, this patent does not address the difficulties of handling a spill which is unexpected and uncontrolled.

Japanese Patent No. 81-87529 (July 16, 1981) describes the removal of aldehydes from gases by contact with urea or urea derivatives, optionally in the presence of an acid.

None of these patents or publications teaches or suggests a way in which to treat and control accidental aldehyde spills such that the spill is quickly solidified and its chemical nature changed so as to mitigate vapors.

Therefore, it is an object of this invention to provide a method to treat accidental aldehyde spills in such away as to control them and mitigate their vapors.

It is a further object of the invention to provide a method to render aldehyde spills less hazardous to those in the vicinity of the spill without engendering danger to those treating the spill.

It is another object of the invention to provide a composition which reacts with an aldehyde spill to change its chemical nature so as to render it substantially less harmful.

Another object of the invention is to provide a method for treating an aldehyde spill from a distance so as to protect those treating the spill.

The method of this invention relates to the solidification of aldehyde spills and the mitigation of vapors released from such spills so as to render them harmless and easy to clean up. Compositions which act to solidify aldehyde spills and mitigate vapors are also provided.

Urea readily reacts with formaldehyde, and other aldehydes, to form a product which can be catalyzed by acid to form a polymer. Two moles of formaldehyde react with one mole of urea as follows (See Equation 1):

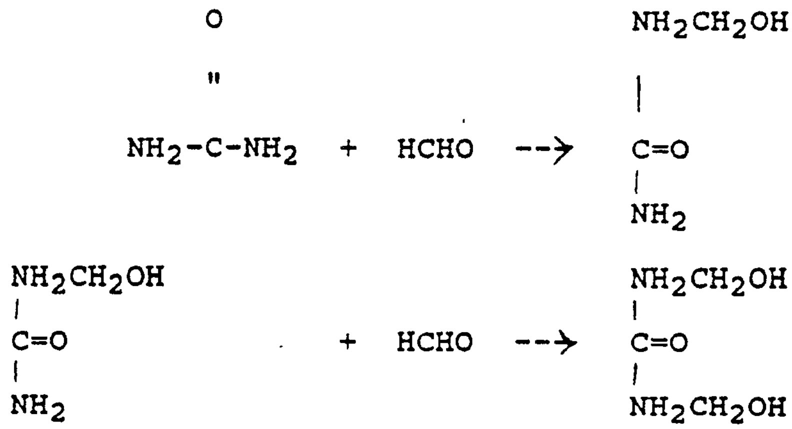

(1)

When catalyzed by acid, the urea and formaldehyde form a large polymer (See Equation 2):

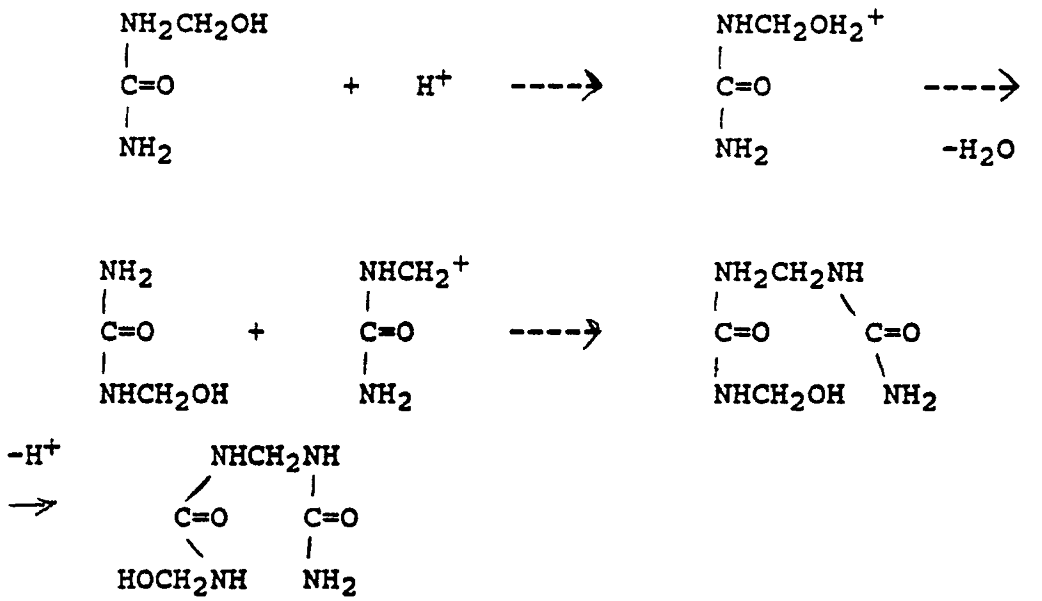

(2)

Surprisingly, when sprayed or otherwise applied to a formaldehyde or other type of aldehyde spill, a urea solution or solid formulation reacts with and polymerizes the spill, thus rendering it solid, mitigating its vapors and making much more susceptible of cleaning and less hazardous than prior methods of cleaning such spills.

According to the method of this invention, a solution of urea is prepared by adding urea to distilled water and adjusting the pH of the solution to an acidic pH, preferably between about 1 and 4, most preferably about 2.0. The liquid solution is then added to a corrosion-resistant container, pressurized and applied under pressure to aldehyde spills. The pressure serves to agitate the spill and spread the solution through the spill. Within a short period of time, a polymer is formed which changes the chemical nature of the spill and, therefore, mitigates the vapors which are normally emitted from the aldehyde. The polymer material is a solid which is easily disposed of. A solid formulation may also be used to react with such spills.

The compositions of this invention may be either liquid or solid.

The solid formulation of the composition of this invention may contain between about 50 to about 65 per cent urea by weight. The formulation may also contain between about 10 and about 30 per cent calcium chloride by weight. The dissolution of urea in formaldehyde is an endothermic reaction. Calcium chloride is added to balance this energy absorbance and consequent temperature decrease. The dissolution of calcium chloride is exothermic and balances the urea/formaldehyde dissolution. Of course, other compounds known to those of skill inthe art which generate energy on dissolution in formaldehyde may be used instead of calcium chloride.

The formulation of the solid form of the composition of this invention may also contain a solid organic acid catalyst such as citric acid, fumaric acid and the like. The organic acid catalyst reacts with the calcium chloride or like compound to decrease the ambient pH and force the reaction between urea and formaldehyde to proceed quickly. Equations 3 and 4, below, illustrate this catalysis:

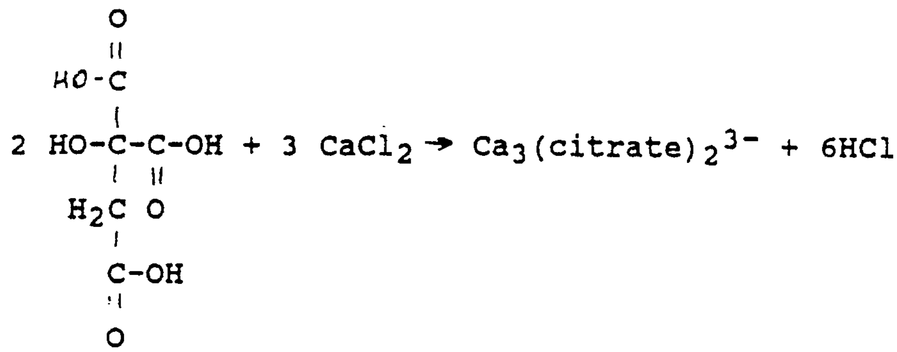

(3)

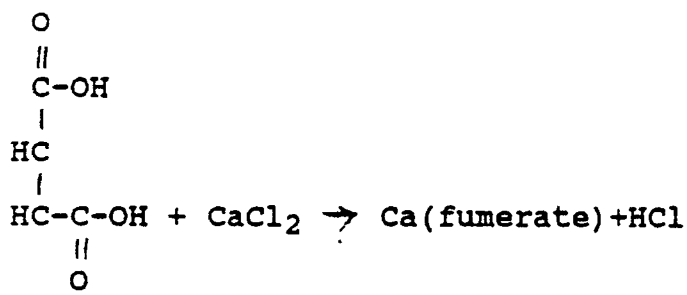

(4)

Adsorbent clays or the like may be added to the solid formulation in order to aid in the diking action of the composition and to minimize moisture to prevent caking of the urea. Attapulgas clay or other very dry, highly adsorbent silicates or the like may be added for this purpose. Surfactants may be used to improve flow characteristics.

The solid formulation can be used in controlling the spread of an aldehyde spill ("diking") and can be applied manually or in the form of a sock filled with solid formulation.

Liquid formulations of the composition of this invention contain about 30 to 100% urea, preferably about 30 to about 50% urea, and are adjusted to the proper pH range for stored pressure (i.e., pH approximately 2.0) or for pumped application (i.e., pH approximately 3.0). The pH adjustment may be made with various mineral and organic acids, including phosphoric acid, hydrochloric acid, sulfuric acid, citric acid, fumaric acid and the like. Most preferably, phosphoric acid is used because it is less corrosive than other acids. Formulations for manual application are kept at approximately pH 2.0. The liquid formulation may also contain an agent which prevents freezing, such as ethylene glycol or the like.

The liquid formulation can be delivered from stored pressure units, pump units or manually. The liquid will react rapidly and eliminate the hazardous and odiferous vapors. The liquid can be applied rapidly to the hazard via stored pressure or pumped units.

The liquid formulation should be stored in an aluminum, stainless steel or brass container or like container which does not corrode easily.

Both liquid and solid formulations can be used in tandem such that a solid formulation can be employed to dike the running spill to prevent the spill from entering sewers, sumps, drains or streams. Most preferably, the solid formulations are used in a sock for diking purposes if calcium chloride is used in the formulation. Solid formulations without calcium chloride are easier to discharge from a pump or pressure unit.

The formulations of this invention may used to solidify and mitigate the vapors of alkyl aldehydes and aryl aldehydes such as formaldehyde, benzaldehyde, benzophenone, ethylaldehyde, butaraldehyde and the like.

The reaction is pH and temperature-dependant. Thus, as the pH decreases, the rate of the reaction increases. As the ambient temperature increases, the rate of the reaction increases. Most preferably, when

ambient conitions are about 20° C, the pH of the formulation should be about 2.0. However, if pumping equipment is very slow, pH should be about 4.0 in order to prevent overly fast solidification, which results in pockets of unsolidified, hazardous portions of the spill.

The following formulations are examples of the types of solid and liquid formulations of the compositions of this invention and methods in which to use them. Of course, the following examples should not be interpreted as limiting the scope of the invention to these particular embodiments.

Example 1

A formulation of solid components including 60% by weight urea, 6.65% citric acid, 22.61% calcium chloride (anhydrous) and 10.74 LVM attapulgas clay was made by mixing. The bulk of the formulation was 128. A spill of 37% formaldehyde was simulated in a dish. 21.67 g of formulation was dispensed to the spill per 10 ml of spill. The reaction between the formulation and the spill began within 1 minute 25 seconds of dispensing. After approximately 30 minutes, the reaction was complete. The reaction was considered complete when the reaction product had solidified enough so that it would not flow when the dish was tipped at a 45° angle.

Example 2

A solution of 94.75% of 50% urea solution and 5.25% citric acid was made by stirring. As in Example 1, a formaldehyde spill was simulated in a dish and 27.44 g of formulation was dispensed onto the spill for each 10 ml of spill. The pH of the formulation was about 2.71. The density of the formulation was 11.39g formulation/10ml spill. The reaction between the spill and the formulation began after about 3 minutes. The reaction was complete after about 40 minutes.

Example 3

A solution containing about 80.40% of 50% urea solution, 4.45% of citric acid and about 15.15% calcium chloride was made by stirring. The pH of the formulation was 1.32. The density of the formulation was 12.37g/10ml. The reaction began after about 1 minute. A formaldehyde spill was simulated as in Example 1. The treatment ratio was 32.34g formulation/10ml spill. The reaction was complete after about 30 minutes.

Example 4

A liquid formulation containing 50% urea in water was adjusted to pH 2.12 with 37% hydrochloric acid. This liquid formulation was placed in a standard 30# Sentry water discharge unit (available from Amerex Co. or Badger Co.). The nozzle tip of the unit was pinched to achieve a fine spray. The unit tare weight was 5.0 lbs. The fill weight was 22.6 lbs. and the final weight after discharge was 5.4 lbs. The percent discharge was 97.7%. The liquid was discharged onto a spill of a gallon of formaldehyde. Agent application was complete after 1 min. 5 sec. Polymerization began after 1 min. 55 sec.. A hard crust formed on top of the spill after 3 minutes. The reaction was complete after 5 min. 10 sec. The final material was very hard and dry.

Example 5

A liquid formulation containing 94.75% of 50% urea and 5.25% citric acid was made by stirring. The application unit tare weight was 5.1#, the fill weight was 28 lbs. and the final weight after application was 5.65 lbs., giving a percent discharge of 97.6%. Agent application was complete after 1 min. 15 sec. Polymerization began after 4 min. 30 sec. and the reaction was complete after 30 min. The material was slushy at the most shallow edges and at the very bottom, but it was solid at the surface.

Example 6

A liquid formulation containing 80.4% 50 urea, 4.45% citric acid and 15.15% calcium chloride (anhydrous) was made by stirring. The application unit tare weight was 5.0 lbs. The fill weight was 27.8 lbs., and the final weight after discharge was 5.8 lbs. The percent discharge was 96.5%. Agent application application took 1 min. 45 sec. Polymerization, accompanied by steaming, began after 2 min. and reaction was complete after nine min. The material in the deeper end of the spill area was solidified after 3 minutes.

Example 7

A solid formulation containing 60% urea, 6.65% citric acid, 22.61% calcium chloride, 10.75% M86-170 (attapulgite clay) and 0.5% Petro AGS (surfactant from Petrochemical Co., Inc.). The formulation was packed into a Spill-gun unit (30#) (available from Ansul Fire Protection Co.) was discharged. The agent packed and would not discharge at first, so the unit was opened and the agent was poured onto the spill. The reaction was completed within 10 minutes and the final material was spongy with a latex-like surface film.

Example 8

A solution of 50% urea (by weight) was adjusted to pH 2 by addition of hydrochloric acid. To this solution was added 20% (by weight) ethylene glycol to protect it from freezing. The resulting liquid agent had a density of 1.1183g/ml. The solution was charged to a Sentry unit. The unit was charged with 23.2 pounds or 2.5 gallons and the pressure was adjusted to 190 psig ($N_2$). The unit was discharged at a formaldehyde spill and the spill which had been made on a 50 square foot metal pan. The spill and treatment solution were allowed to react while being stirred when polymerization began. The following table sets forth the results of the tests % discharge indicates the percentage of formulation discharged from the unit, "Qty. of $CH_2O$ Gals. Lbs." indicates the quantity of formaldehyde treatment per pound of formulation, "Temp." indicates ambient temperature, "Run Start" indicates when the reaction began and "Run Complete" indicates when the reaction was complete:

| % Discharge | Qt. of $CH_2O$ Gals./Lbs. | Temp. | Reaction Start | Reaction Complete |
|---|---|---|---|---|
| 95.25 | 1.0/9.0 | 74° F | 37 sec. | 1 min. 55 sec. |
| 96.6 | 1.25/11.5 | 64° F | 47 sec. | 2 min. 25 sec. |
| 96.6 | 1.5/13.5 | 64° F | 1 min. 3 sec. | 2 min. 1 sec. |
| 98.3 | 1.75/15.75 | 64° F | 1 min. 2 sec. | 2 min. 10 sec. |

A second series of tests was run using a 50% urea solution at pH 2. The density was 1.1353 g/ml, the unit was charged with 23.6 pounds (2.5 gal.) and the pressure was 190 psig ($N_2$).The following test runs were all stirred except number 3, and all resulted in dry to very dry products:

| % Discharge | Qty. of $CH_2O$ Gals./Lbs. | Temp. | Run Start | Run Complete |
|---|---|---|---|---|
| 1 97.5 | 1.27/11.5 | 62° F | 45 sec. | 1 min. 50 sec. |
| 2 97.9 | 1.59/14.4 | 62° F | 50 sec. | 1 min. 32 sec. |
| 3 97.5 | 1.59/14.7 | 62° F | 52 sec. | 1 min. 35 sec. |
| 4 97.9 | 1.91/17.2 | 64° F | 52 sec. | 1 min. 35 sec. |
| 5 97.5 | 1.91/17.2 | 64° F | 42 sec. | 1 min. 35 sec. |
| 6 97.5 | 2.23/30.1 | 64° F | 1 min. 3 sec. | 1 min. 45 sec. |
| 7 97.0 | 2.78/25 | 62° F | 1 min. 10 sec. | 2 min. 10 sec. |

These tests indicated that more than three gallons of formaldehyde could be solidified with one unit of formulation using the method of this invention.

Example 9

A determination was made of the amounts of formaldehyde residue remaining in solidified samples of material resulting from the treatment of formaldehyde spills with formulations of this invention. Formaldehyde reacts with a chromotropic acid-sulfuric acid solution to form a purple monocatonic chromogen. The absorbance of the resulting solution is measured in a spectrophotometer at 580nm and is proportional to the quantity of formaldehyde in the solution.

Samples of the solidified material remaining after the treatment of 37% formaldehyde with the formulations of this invention were collected and stored in a refrigerator until analysis. All glassware used in the analysis was soaked in a 1:1 mixture of nitric and sulfuric acids and rinsed with freshly distilled water in order to remove possible organic contaminants that can be charred by concentrated sulfuric acid. A 0.01N iodine solution was standardized against sodium thiosulfate by titration according to the reaction:

$2\ S_2O_3 + I_2 \longrightarrow S_4O_6 + 2I$

A formaldehyde standard solution was standardized against 0.01N iodine using starch as the indicator. A standard curve was prepared using 0, 0.1, 0.3, 0.5, 0.7, 1.0, and 2.0 ml of the formaldehyde standard (See Figure 1). After each sample was diluted to 4.0 ml, 0.1 ml of chromotropic acid and 6.0 ml of concentrated sulfuric acid were added. When the samples had cooled to room temperature, the abosrbance of the colored solutions was read.

The samples of solidified material were prepared for testing against the standard curve by making a slurry of the solid material by braking up a known weight of solid and mixing it or 10 minutes in approximately 40 ml of distilled water. The slurry was then vacuum filtered and the filtrate was diluted to 100 ml with distilled water. In order to determine the effect of mixing time on the release of free formaldehyde, one of the samples (Sample 16) was mixed for 19 hours. The ppm of formaldehyde in the solid was determined using the following equation:

ppm CH2O in solid = (ppm from curve) (100ml)/grams of solid used

The following results were obtained from the analysis. The term "Weight,g" indicates weight of the sample in grams, "Aliquot, ml" indicates the absorbance measured at 580nm, "ug/% Polymer" indicates the micrograms of formaldehyde left unreacted in the sample and the percentage of the polymer which is made up by formaldehyde from the original spilled solution, (which was 37% formaldehyde), and "ppm" indicates the parts per million of free, unreacted formaldehyde in the sample:

| # | Weight,g | Aliquot,ml | Abs. | ug/%Polymer | ppm |
|---|---|---|---|---|---|
| 1 | 9.96 | 0.1 | 0.979 | 6.70/36.93 | 672.89 |
| 2 | 9.59 | 0.2 | 0.810 | 5.50/36.93 | 286.55 |
| 3 | 10.02 | 0.2 | 0.994 | 6.81/36.97 | 339.77 |
| 4 | 10.20 | 0.01 | 0.134 | 0.68/36.93 | 661.76 |
| 5 | 10.11 | 0.2 | 1.393 | 9.65/36.96 | 477.44 |
| 6 | 9.97 | 0.1 | 0.465 | 3.04/36.97 | 304.51 |
| 7 | 10.17 | 0.1 | 0.233 | 1.38/36.99 | 135.89 |
| 8 | 9.89 | 0.02 | 0.167 | 0.91/36.95 | 460.57 |
| 9 | 9.69 | 0.01 | 0.270 | 1.64/36.83 | 1697.63 |
| 10 | 10.57 | 0.1 | 0.481 | 3.15/36.97 | 290.01 |
| 11 | 9.29 | 0.01 | 0.276 | 1.69/36.82 | 1817.00 |
| 12 | 10.69 | 0.1 | 0.201 | 1.15/36.99 | 107.85 |
| 13 | 10.40 | 0.1 | 0.164 | 0.89/36.99 | 85.48 |
| 14 | 9.92 | 0.1 | 0.151 | 0.80/36.99 | 80.34 |
| 15 | 10.59 | 0.1 | 0.162 | 0.88/36.99 | 82.63 |
| 16 | 10.20 | 0.1 | 0.756 | 5.11/36.95 | 510.08 |

Samples 1, 7, 11, 13 and 16 were made from the treatment of formaldehyde spills with a formulation containing 50% urea and 20% ethylene glycol, the density of which was 1.11183. Samples 2, 3, 4, 5, 6, 8, 9 and 10 were made from the treatment of formaldehyde spills with a formulation containing 50% urea with a density of 1.1353. Samples 9 and 10 were not stirred. Samples 12, 14 and 15 were made from a solid urea formulation.

In general, mixing the agent with the formaldehyde ensures a more complete reaction. However, it is not necessary in order to clean up a formaldehyde spill. Generally, the agitation caused by the pressured stream of formulation effects stirring sufficient to promote a complete reaction. The data indicate that a spill

of 25 pounds of 37% formaldehyde can be cleaned up with 2.5 gallons of formulation which does not contain ethylene glycol for freeze protection. More than 99% of the formaldehyde in the original spill is reacted and solidified using the compositions and methods of this invention.

Example 10

A series of laboratory scale reactions were performed using 40% urea at pH 2 to determine the optimum ratio of urea to formaldehyde to use in the solidification reaction. Analysis of the reaction characteristics and the amount of formaldehyde remaining in the resultant polymer matrix indicated that a one-to-one mole ratio was the most efficient. In the laboratory, a 1:1 mole ratio reaction started at 2 minutes 55 seconds, was complete in 5 minutes and contained a residual 2046 ppm of formaldehyde in the final product, indicating a 99.45% polymerization. A 2.5 gallon Sentry unit containing a charge of 23.4 pounds of urea solution was reacted with 1.4 gallons (12.6 pounds) of 37% formaldehyde at 90° F under sunny skies. This resulted in a reaction which started in 40 seconds, was complete after 1 minute 25 seconds, and had a residual 321.6 ppm of formaldehyde, indicating a 99.91% polymerization.

Example 11

A solution of 40% urea was adjusted to pH 2, 3 and 4 using concentrated hydrochloric acid. The weight percents of each solution are shown below.

| | | Urea | Water | HCl |
|---|---|---|---|---|
| pH | 2.05 | 38.18 | 57.23 | 4.64 |
| | 3.03 | 38.69 | 58.06 | 3.25 |
| | 4.03 | 40 | 59.93 | 0.07 |

Each solution was reacted with 37% formaldehyde on a 1:1 mole ratio basis at various constant temperatures, and the time at which the reaction began and was completed was noted. The reactions were carried out in a jacketed flask with a circulating bath to ensure that all reactants were at the same temperature. The results for pH 2 and 4 are shown in Figures 2 and 3 respectfully. These Figures show that a decrease in pH increases reaction rate and at each pH, an increase in temperature increases reaction rate. The results for all three reactions are reflected in Figure 4, which demonstrates the effect of pH on a reaction rate at constant temperature.

Example 12

The crystallization points of the following formulations made according to this inventionwere determined and are presented in Figure 5. Even when frozen and thawed, the formulations of this invention maintain their solidification properties.

| Solution | pH | %Urea | %HCl | %Water | Cryst. Pt. °C |
|---|---|---|---|---|---|
| control ($H_2O$) | 8 | 47.43 | 0 | 52.57 | 0 |
| 50% | 2 | 47.9 | 4.2 | 47.9 | -15 |
| 45% | 2.07 | 43 | 5.26 | 51.7 | -11 |
| 40% | 2.03 | 39.3 | 2.5 | 58.2 | -17 |
| 35% | 2.02 | 34.45 | 2.47 | 63.08 | -15 (frozen) |
| 30% | 1.95 | 29.73 | 2.27 | 68 | -12 (frozen along edges) |

## Claims

1. A method of solidifying hazardous aldehyde spills and mitigating their odor comprising applying to the spill a composition containing urea said composition being at a pH at which said aldehyde spill and said urea composition react and polymerize.

2. A method according to claim 1 wherein an acid is applied to said spill in tandem with said urea composition.

3. A method according to claim 1 wherein said composition is solid.

4. A method according to claim 3 wherein said composition contains about 50 to about 65% by weight of urea, about 5 to about 10% acid and has a pH of between 1 and 4 and preferably of about 2.

5. A method according to claim 4 wherein about 10 to about 30 weight percent of calcium chloride is added to the composition.

6. A method according to claim 4 wherein said organic acid is selected from the group consisting of citric acid and fumaric acid.

7. A method according to claim 1 wherein said composition is liquid.

8. A method according to claim 7 wherein said composition contains about 30 to about 100% by weight of urea and about 5 to about 10% of acid.

9. A method according to claim 7 wherein said organic acid is selected from the group consisting of phosphoric acid, sulfuric acid, acetic acid hydrochloric acid and citric acid.

10. A composition for solidifying hazardous aldehyde spills and mitigating their odor comprising about 50 to about 65% by weight of urea, about 5 to about 10% acid and which has a pH of between 1 and 4 and preferably of about 2.

11. A composition according to claim 10 wherein said acid is citric acid or fumaric acid.

12. A composition for solidifying hazardous aldehyde spills and mitigating their odor comprising about 30 to about 100% by weight of urea, about 5 to about 10% of acid and having a pH of about 2 to about 4.

13. A composition according to claim 12 wherein said acid is selected from the group consisting of phosphoric acid, sulfuric acid, hydrochloric acid, acetic acid and citric acid.

14. A composition according to claim 12 containing about 50% urea, wherein said acid is phosphoric acid and the pH is about 2.0.

15. A composition according to any of claims 10-14 further comprising an absorbant clay or like material, preferably attapulgas clay.

Neu eingereicht / Newly filed
Nouvellement déposé



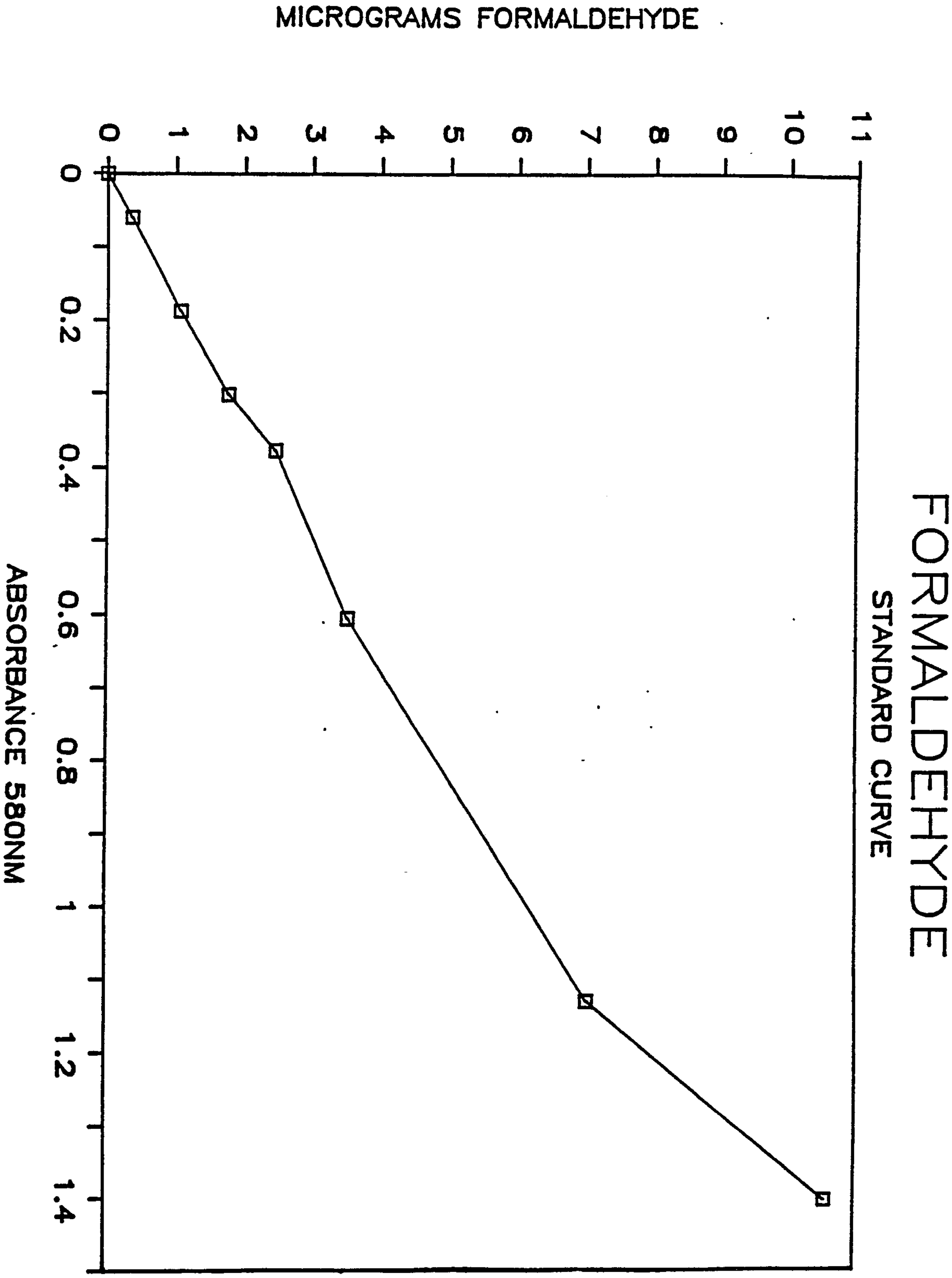


FIG. I

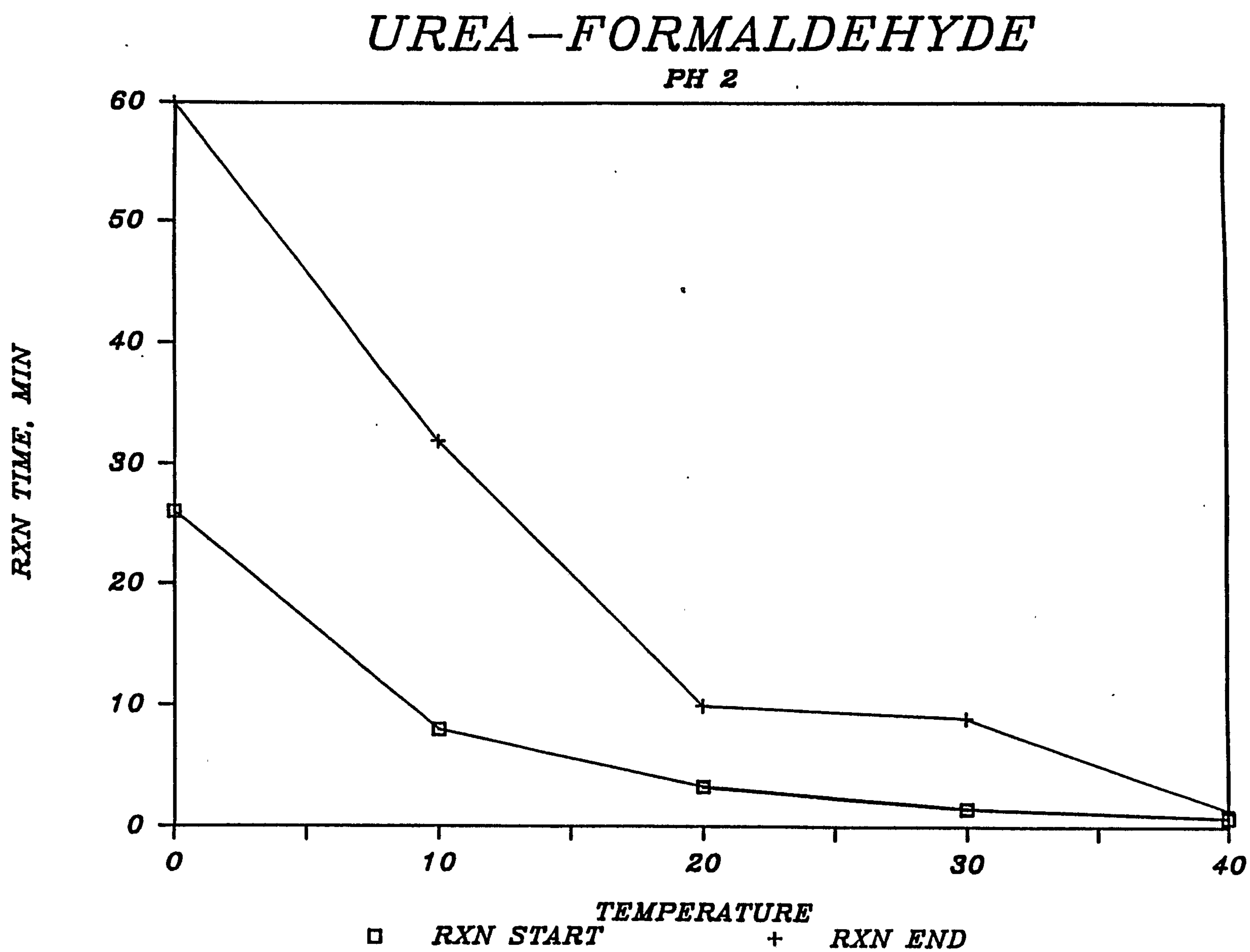
UREA—FORMALDEHYDE
PH 2
RXN TIME, MIN
0
10
20
30
40
50
60
0
10
20
30
40
TEMPERATURE
RXN START
RXN END

FIG. 2

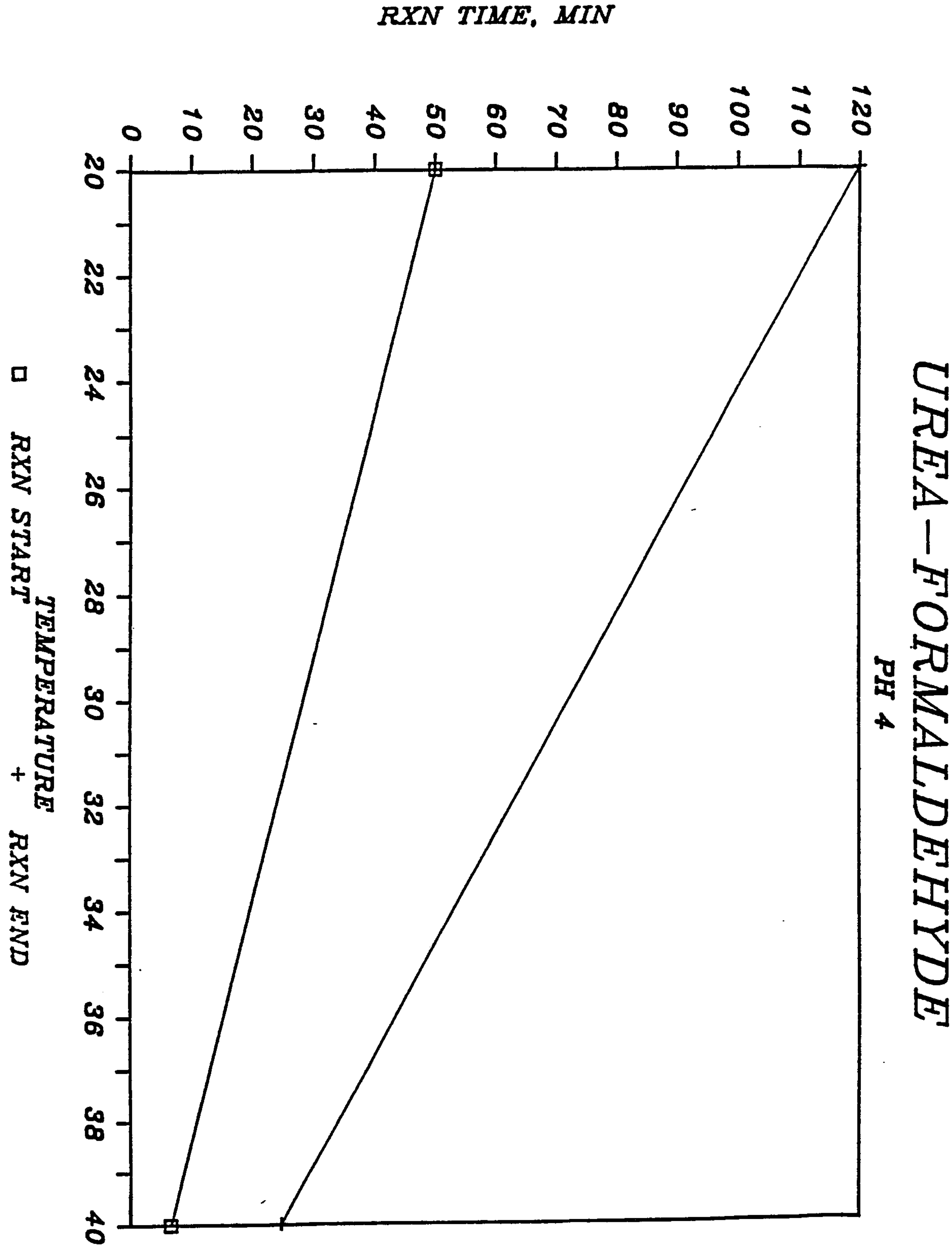
UREA-FORMALDEHYDE
PH 4
RXN TIME, MIN
0
10
20
30
40
50
60
70
80
90
100
110
120
20
22
24
26
28
30
32
34
36
38
40
TEMPERATURE
RXN START
RXN END

FIG. 3

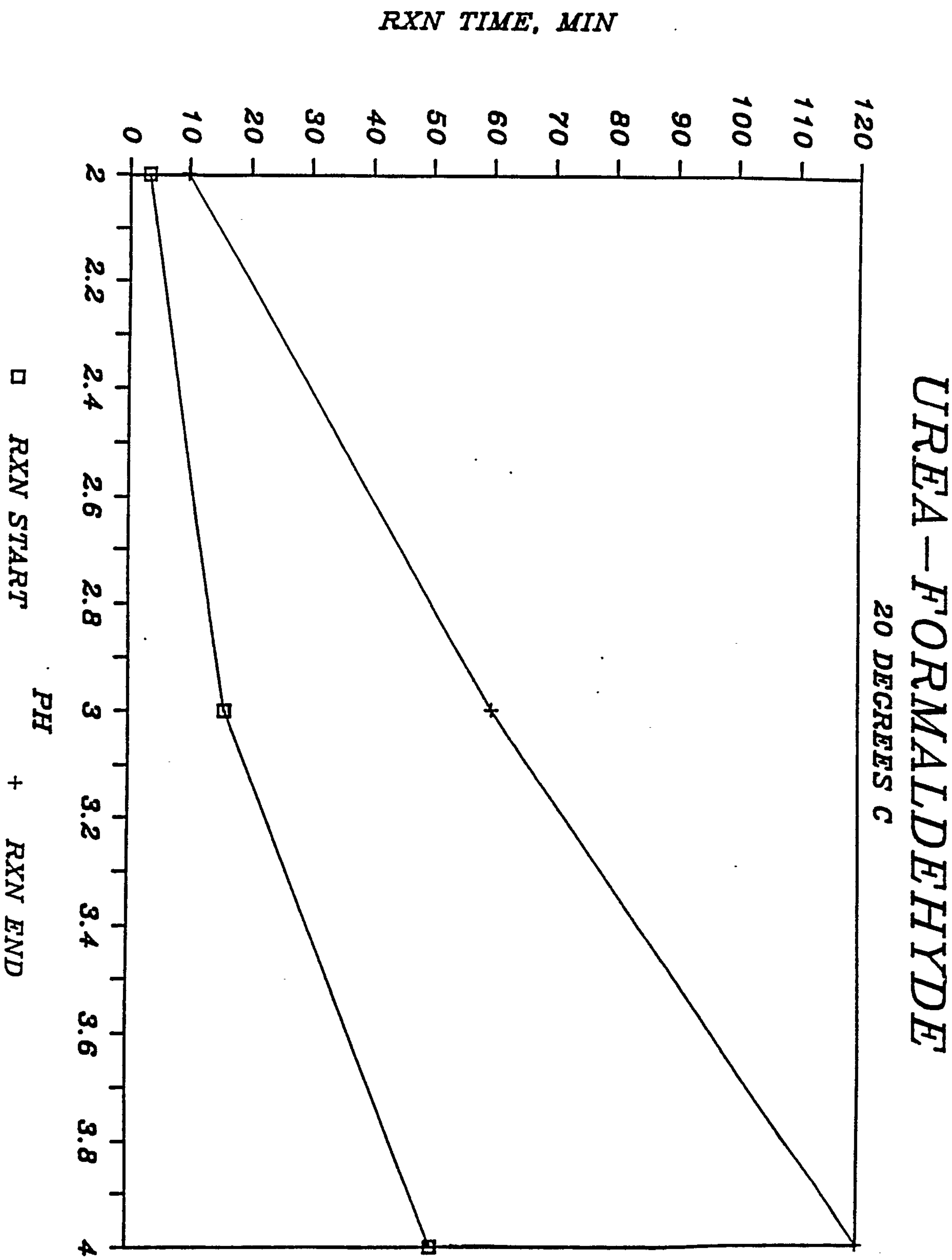
UREA-FORMALDEHYDE
20 DEGREES C
RXN TIME, MIN
0
10
20
30
40
50
60
70
80
90
100
110
120
2
2.2
2.4
2.6
2.8
3
3.2
3.4
3.6
3.8
4
PH
□ RXN START
+ RXN END

FIG. 4

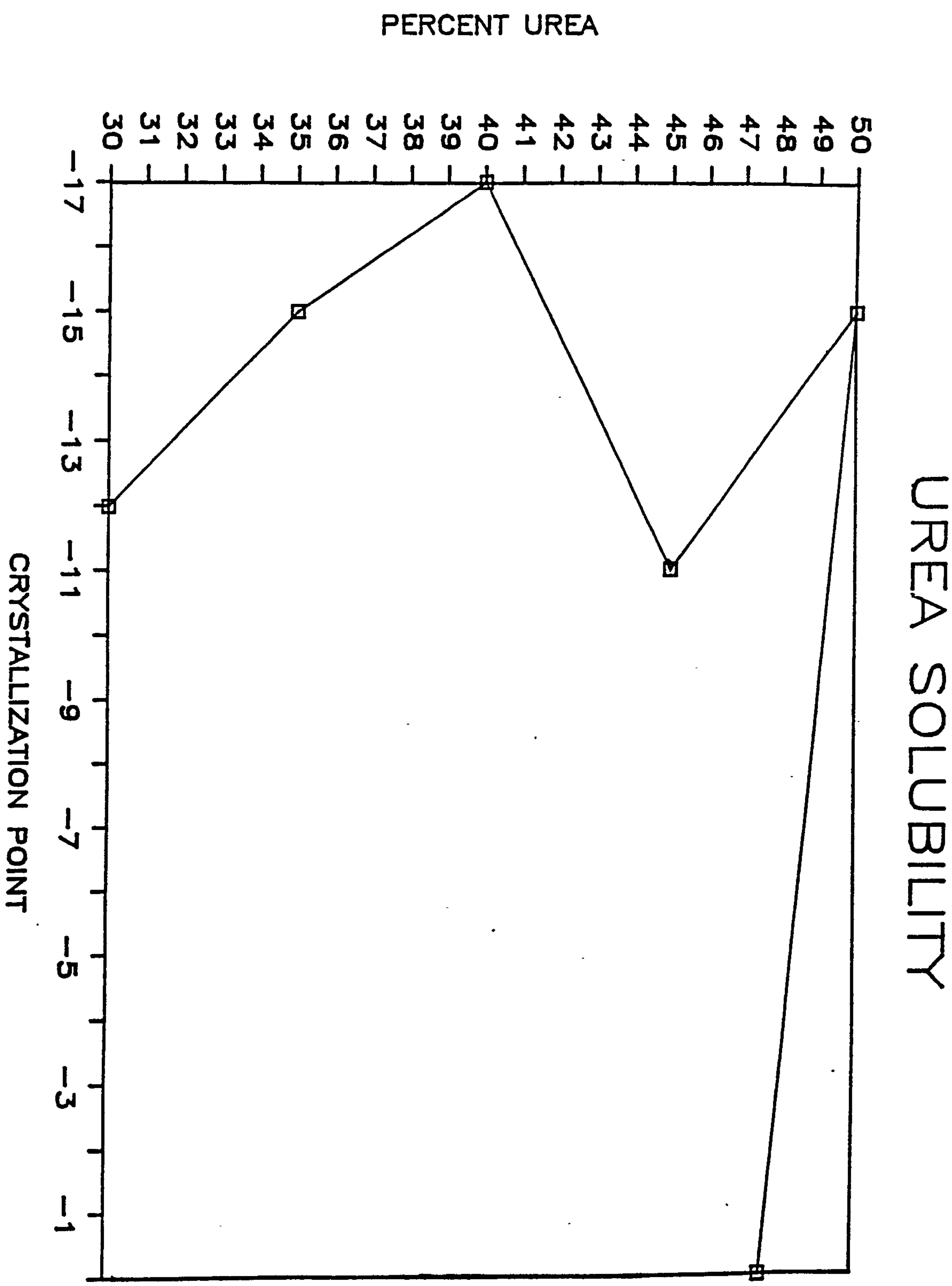
UREA SOLUBILITY
PERCENT UREA
30 31 32 33 34 35 36 37 38 39 40 41 42 43 44 45 46 47 48 49 50
−17 −15 −13 −11 −9 −7 −5 −3 −1
CRYSTALLIZATION POINT

FIG. 5

European Patent Office

# EUROPEAN SEARCH REPORT

Application Number

EP 88 31 1016

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | JAPANESE PATENTS REPORT, section Chemical, vol. 78, no. 41, page 4, abstract no. E17-J1, Derwent Publications, London, GB; & JP-B-78 037 077 (ASAHI GLASS K.K.) 06-10-1978<br>* Abstract *<br>----- | 1,7 | A 62 D 3/00<br>B 01 D 53/34 |
| | | | TECHNICAL FIELDS SEARCHED (Int. Cl.4) |
| | | | A 62 D<br>B 01 D |

The present search report has been drawn up for all claims

| Place of search | Date of completion of the search | Examiner |
|---|---|---|
| THE HAGUE | 17-03-1989 | PYFFEROEN K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)